# EUROPÄISCHE PATENTSCHRIFT

(11) **EP 3 984 802 B1**
(45) Veröffentlichungstag und Bekanntmachung des Hinweises auf die Patenterteilung: **24.05.2023**
(21) Anmeldenummer: 21201969.9
(22) Anmeldetag: 11.10.2021
(51) Int. Cl.: B60K 35/00, B60K 37/04, B60R 11/00

(54) **ANZEIGEVORRICHTUNG UND VERFAHREN ZUR HERSTELLUNG EINES SOLCHEN**
DISPLAY DEVICE AND METHOD FOR THE PRODUCTION OF SUCH A DEVICE
DISPOSITIF D'AFFICHAGE ET PROCÉDÉ DE FABRICATION D'UN TEL DISPOSITIF

(30) Priorität: 14.10.2020 DE 102020212990
(43) Veröffentlichungstag der Anmeldung: 20.04.2022
(73) Patentinhaber: Continental Automotive Technologies GmbH, 30165 Hannover (DE)
(72) Erfinder: Thomas, Jörg, 60488 Frankfurt am Main (DE); Arnold, Nils, 60488 Frankfurt am Main (DE)
(74) Vertreter: Continental Corporation

(56) Entgegenhaltungen:
- WO-A1-2020/081488
- US-A1- 2014 240 638
- US-A1- 2019 212 605

## Beschreibung

Die vorliegende Erfindung betrifft eine Anzeigevorrichtung aufweisend ein elektrooptisches Display und ein Metallgehäuse zum Einbau in ein Kraftfahrzeug, wobei die Anzeigevorrichtung zur Verbindung mit einem Kraftfahrzeug ausgestaltet ist. Bei einer Anzeigevorrichtung wird üblicher Weise ein Gehäuse in der der Art eines Druckgussbauteil (z.B. aus Magnesium oder Aluminium) als steifes tragendes Element eingesetzt. Die mit den Druckgussbauteilen erreichbaren Fertigungstoleranzen sind in der Regel zu groß. Die großen Fertigungstoleranzen führen zu unerwünschten Spaltmaßen zum Fahrzeug und können bei der Montage zu unerwünschten Krafteinleitungen führen. Die undefinierte Krafteinleitung führt dann zu unerwünschten Effekten in dem elektrooptischen Display.

Um einen nahezu toleranzfreien Einbau einer vorgenannten Anzeigevorrichtung in ein Fahrzeug zu realisieren erfolgt dies üblicher Weise über Böllhof Elemente oder mittels geschraubten Elementen / Konsolen, die bei der Montage zu Referenzkanten / -flächen (z.B. zu einem Deckglas des elektrooptischen Displays ) ausgerichtet werden. Diese Montageart ist aufwändig und teuer. Deshalb ist es weiterhin bekannt, die Druckgussbauteile spanend zu bearbeiten, um geforderte Toleranzen zu erreichen und so negative Auswirkungen auf das elektrooptische Display zu vermeiden. Auch diese spanende Bearbeitung ist aufwändig und teuer.

US2019212605A1 zeigt eine gattungsgemäße Anzeigevorrichtung.

Aufgabe der vorliegenden Erfindung ist es daher, eine Anzeigevorrichtung aufweisend ein elektrooptisches Display und ein Metallgehäuse zum Einbau in ein Kraftfahrzeug anzugeben, wobei die Anzeigevorrichtung zur Verbindung mit einem Kraftfahrzeug ausgestaltet ist und ein Verfahren zum Herstellen einer derartigen Anzeigevorrichtung anzugeben, die die einfacher und preiswerter zu realisieren sind, anzugeben.

Diese Aufgabe wird durch eine Anzeigevorrichtung mit den Merkmalen des Patentanspruchs 1 und einem Verfahren mit den Merkmalen des Patentanspruchs 10 gelöst.

Dadurch, dass das Metallgehäuse mit einem Kunststoffelement verbunden ist und das Kunststoffelement zur Verbindung mit dem Fahrzeug ausgestaltet ist, können die einfacher erreichbare hohe Toleranz des Kunststoffelements ausgenutzt und durch die Verklebung des Kunststoffelements mit dem Metallgehäuse größere Toleranzen des Metallgehäuses ausgeglichen werden.

Wenn das Kunststoffelement eine Anbindung zur Verbindung der Anzeigevorrichtung mit einem Kraftfahrzeug aufweist, wird die Toleranz des Bauteils weiter verbessert. Hierbei kann die Anbindung rein aus Kunststoff hergestellt sein und möglicherweise durch eine Auflagefläche des Gehäuses zusätzlich unterstützt werden. Hierbei kann die Verklebung zwischen der Auflagefläche des Gehäuses und der Anbindung des Kunststoffelements alleine oder zusätzlich realisiert sein.

Wenn das elektrooptische Display mit einem Kunststoffrahmen und der Kunststoffrahmen mit dem Metallgehäuse verklebt ist, ist das elektrooptische Display sicher und toleranzarm mit dem Metallgehäuse verbunden. Hierbei kann das elektrooptische Display direkt oder über ein Deckglas mit dem Kunststoffrahmen verbunden sein.

Falls das elektrooptische Display mit dem Kunststoffrahmen direkt oder über ein Deckglas verclipst oder verschraubt ist und der Kunststoffrahmen mit dem Gehäuse verklebt ist, wird eine einfache Verbindung zwischen Metallgehäuse und elektrooptischen Display realisiert. Weiterhin ist das elektrooptische Display hierbei sicher und toleranzarm mit dem Metallgehäuse verbunden.

Dadurch, dass das Kunststoffelement rahmenförmig ausgestaltet ist, wird eine besondere Stabilität des Kunststoffelements realisiert.

Wenn die Anzeigevorrichtung eine Beleuchtungsvorrichtung aufweist, die zwischen dem elektrooptischen Display und dem Metallgehäuse angeordnet ist, kann ein durchleuchtbares elektrooptisches Display von seiner Rückseite durchleuchtet werden und ist dadurch auch in Dunkelheit gut sichtbar.

Sofern die Beleuchtungsvorrichtung einen Lichtleiter aufweist können Lichtquellen der Beleuchtungsvorrichtung thermisch mit dem Gehäuse verbunden werden und Licht der Lichtquellen zu dem elektrooptischen Display geleitet werden.

Falls die Anzeigevorrichtung eine Blende aufweist kann sie einfach optisch ansprechend gestaltet werden.

Wenn die Blende zwischen dem elektrooptischen Display und dem Lichtleiter angeordnet ist kann störendes Streulicht unterdrückt werden und die Blende den Lichtleiter zusätzlich sichern.

Dadurch, dass bei einem erfindungsgemäßen Verfahren zur Herstellung einer vorstehend beschriebenen Anzeigevorrichtung das Kunststoffelement zu dem Metallgehäuse so ausgerichtet wird, dass sich ein Zwischenraum zwischen dem Metallgehäuse und dem Kunststoffelement ergibt und der sich ergebender Zwischenraum zwischen dem Kunststoffelement und dem Gehäuse mit einem Klebstoff zumindest teilweise so ausgefüllt ist oder wird, dass das Gehäuse mit dem Kunststoffelement verklebt wird, kann auf einfache Weise die geforderte Toleranz erreicht werden. "Ausgefüllt ist" bedeutet hierbei, dass zunächst eines der beiden Bauteile mit Klebstoff beispielsweise raupenförmig versehen wird und dann die beiden Teile zueinander ausgerichtet werden. "Ausgefüllt wird" bedeutet, dass zunächst die beiden Bauteile zueinander ausgerichtet werden und dann der Klebstoff zugeführt wird. Die erreichbare Toleranz hängt hauptsächlich mit der erzielbaren Genauigkeit der Ausrichtung zwischen dem Metallgehäuse und dem Kunststoffelement ab.

Diese Genauigkeit lässt sich insbesondere dadurch erreichen, dass das Metallgehäuse in eine erste Haltevorrichtung und das Kunststoffelement in eine zweite Haltevorrichtung eingespannt und danach zueinander ausgerichtet werden.

Falls das elektrooptische Display mit dem Kunststoffrahmen verklebt wird, bevor das Kunststoffelement mit dem Metallgehäuse verklebt wird, werden auf das elektrooptische Display während und nach dem Zusammenbau keine unerwünschten Kräfte ausgeübt.

Das elektrooptische Display kann auch als selbstleuchtendes Display, wie beispielsweise ein OLED, ausgestaltet sein.

Die Erfindung wird nachfolgend an Hand der Figuren näher erläutert. Es zeigen:
Fig 1 eine Aufsicht auf ein Ausführungsbeispiel einer erfindungsgemäßen Anzeigevorrichtung
Fig. 2 den Schnitt A-A aus Fig.1
Fig 3 den Schnitt B-B aus Fig 1
Fig. 4 eine erste Abwandlung der Darstellung aus Fig. 2
Fig. 5 eine zweite Abwandlung der Darstellung aus Fig. 2

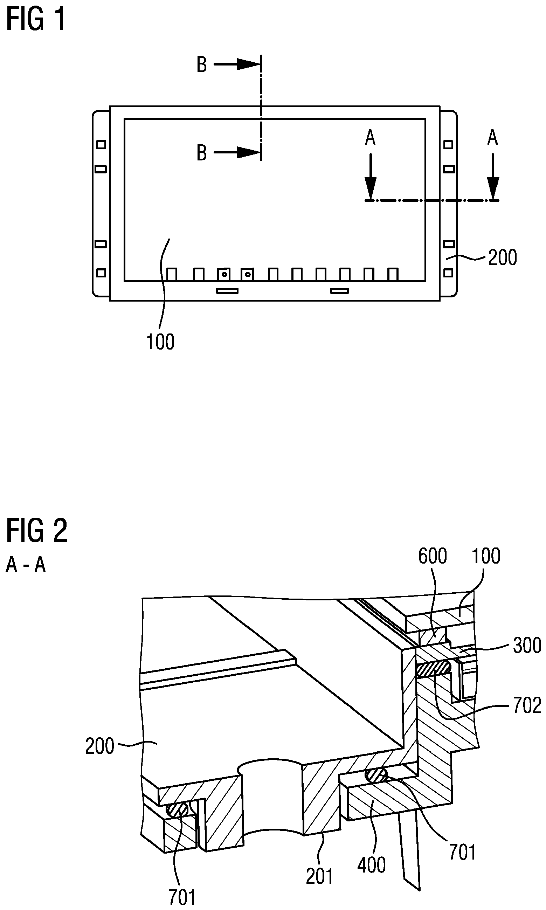

In Figur 1 erkennt man von dem Ausführungsbeispiel der erfindungsgemäßen Anzeigevorrichtung ein Deckglas 100 des elektrooptischen Displays und ein Kunststoffelement 200.

In Figur 2 erkennt man das Deckglas 100 eines ansonsten nicht dargestellten elektrooptischen Displays, ein Kunststoffelement 200 mit Anbindung 201, einen Kunststoffrahmen 300, ein Metallgehäuse 400, ein Klebeband 600 und Klebstoff 701, 702. Das Kunststoffelement 200 ist mittels des Klebstoffs 701 mit dem Metallgehäuse 400 verbunden und weist die Anbindung 201 auf. Diese Anbindung 201 ist vorgesehen und ausgebildet, in einem nicht dargestellten Fahrzeug auf entsprechenden Auflageflächen aufgelegt zu werden und mittels eines Befestigungselements wie beispielsweise einer Schraube oder eines Niets fixiert zu werden. Dieses Befestigungselement kann beispielsweise durch das im Schnitt dargestellte Loch geführt werden. Das Deckglas 100 des ansonsten nicht dargestellten elektrooptischen Displays ist über das Klebeband 600 mit dem Kunststoffrahmen 300 verbunden, der über den Klebstoff 702 mit dem Metallgehäuse 400 verbunden ist. Durch die Ausrichtung des Kunststoffelements 200 zu dem Metallgehäuse 400 wird auf einfache Art und Weise die geforderte enge Toleranz ohne eine spanende Metallbearbeitung des Metallgehäuses 400 erreicht. Eine weitere Verbesserung der Toleranz wird durch den Klebstoff 702 erreicht, wenn der Kunststoffrahmen 300 zu dem Metallgehäuse 400 ausgerichtet wird. Das Kunststoffelement kann beispielsweise drei oder vier Anbindungen 201 aufweisen.

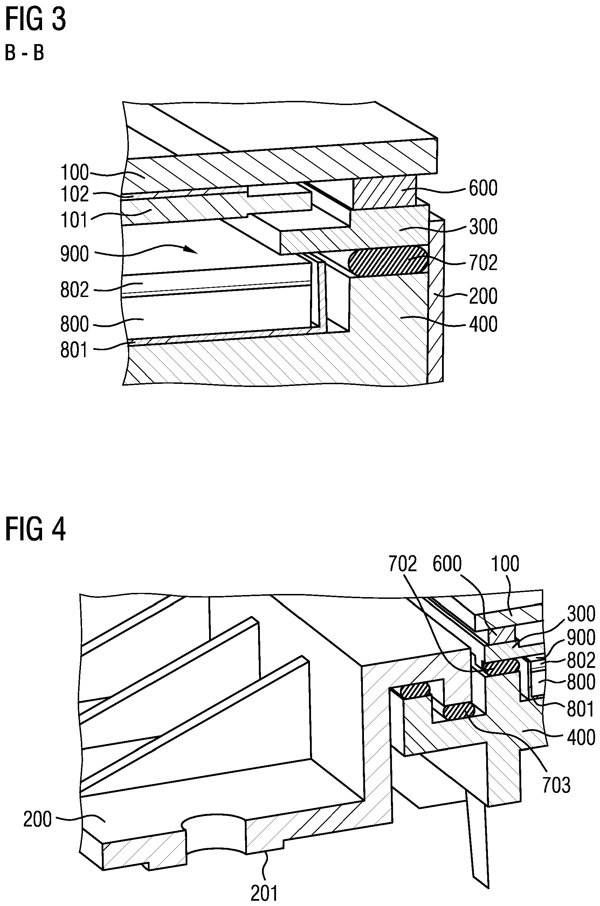

In Figur 3 erkennt man neben den bereits beschriebenen Bauteilen eine Verklebung 102, ein elektrooptisches Display 101, einen Lichtleiter 800, eine Reflektor-Folie 801, eine Streufolie 802 und einen Zwischenraum 900. Das elektrooptische Display 101 ist über die Verklebung 102 mit dem Deckglas 100 verbunden. Die Verklebung 102 kann beispielsweise aus einem transparenten doppelseitig beschichteten Klebeband oder einem sonstigen Optical-Bonding Material bestehen. Der Kunststoffrahmen 300 wirkt einerseits als Blende und fixiert den Lichtleiter 800 samt Reflektorfolie 801 und Streufolie 802.

In Figur 4 sind das Kunststoffelement 200 und das Metallgehäuse 400 gegenüber der Darstellung in Figur 2 leicht abgeändert. Das Kunststoffelement 200 wird im Bereich der Anbindung 201 nicht mehr von dem Metallgehäuse 400 unterstützt. Es ist vielmehr wie dargestellt nur an seinem Rand über Klebstoff 703 mit dem Metallgehäuse 400 verbunden. Hierbei kann der sich zwischen dem Kunststoffelement 200 und dem Gehäuse 400 ergebende Zwischenraum vollständig mit Klebstoff 703 ausgefüllt sein oder wie dargestellt an den in der Figur dargestellten jeweils horizontalen Flächen.

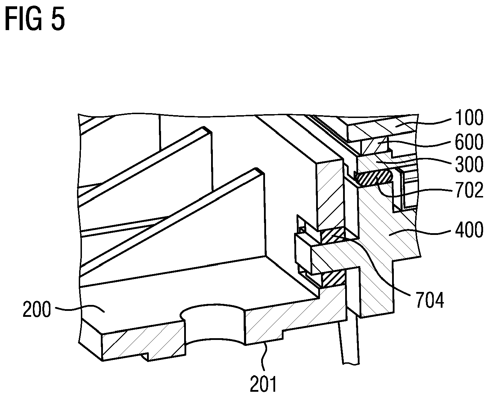

Auch in Figur 5 sind das Kunststoffelement 200 und das Metallgehäuse 400 gegenüber den Darstellungen in Figur 2 und 4 leicht abgeändert. Hier weist das Metallgehäuse 400 an seinem in der Figur dargestellten linken Rand nur einen kurzen Vorsprung auf, an dessen Oberseite und Unterseite jeweils Klebstoff 704 angeordnet ist. Hierdurch können bei der Montage der Anzeigevorrichtung vor Abbinden des Klebstoffs 704 das Kunststoffelement 200 und das Metallgehäuse 400 zueinander ausgerichtet werden und so die geforderte Toleranz ohne eine Metallbearbeitung erreicht werden.

### Bezugszeichenliste

100 Deckglas des elektrooptischen Displays 101
101 elektrooptisches Display
102 Verklebung
200 Kunststoffelement
201 Anbindung
300 Kunststoffrahmen
400 Metallgehäuse
600 Klebeband
701, 703, 704 Klebstoff zwischen Metallgehäuse und Kunststoffelement
702 Klebstoff zwischen Metallgehäuse Kunststoffrahmen
800 Lichtleiter
801 Reflektor-Folie
802 Streufolie
900 Zwischenraum

## Patentansprüche

1. Anzeigevorrichtung aufweisend ein elektrooptisches Display (101) und ein Metallgehäuse (400) zum Einbau in ein Kraftfahrzeug, wobei die Anzeigevorrichtung zur Verbindung mit dem Kraftfahrzeug ausgestaltet ist, wobei die Anzeigevorrichtung weiterhin ein Kunststoffelement (200) aufweist, das mit dem Metallgehäuse (400) verbunden ist, und das Kunststoffelement (200) zur Verbindung mit dem Kraftfahrzeug ausgestaltet ist,
**dadurch gekennzeichnet, dass** das Kunststoffelement (200) mit dem Metallgehäuse (400) mittels Klebstoff (701, 703, 704) verklebt ist.

2. Anzeigevorrichtung nach Patentanspruch 1, **dadurch gekennzeichnet, dass** das Kunststoffelement (200) eine Anbindung (201) zur Verbindung der Anzeigevorrichtung mit dem Kraftfahrzeug aufweist.

3. Anzeigevorrichtung nach Patentanspruch 1 oder 2, **dadurch gekennzeichnet, dass** das elektrooptische Display (101) über einen Kunststoffrahmen (300) mit dem Metallgehäuse (400) mittels Klebstoff (702) verklebt ist.

4. Anzeigevorrichtung nach Patentanspruch 1 oder 2, **dadurch gekennzeichnet, dass** das elektrooptische Display (101) mit einem Kunststoffrahmen verclipst oder verschraubt ist und der Kunststoffrahmen mit dem Gehäuse (400) mittels Klebstoff (702) verklebt ist.

5. Anzeigevorrichtung nach einem der vorstehenden Patentansprüche, **dadurch gekennzeichnet, dass** das Kunststoffelement (200) rahmenförmig ausgestaltet ist.

6. Anzeigevorrichtung nach einem der vorstehenden Patentansprüche, **dadurch gekennzeichnet, dass** sie eine Beleuchtungsvorrichtung (800, 801, 802) aufweist, die zwischen dem elektrooptischen Display (101) und dem Metallgehäuse (400) angeordnet ist.

7. Anzeigevorrichtung nach Patentanspruch 6, **dadurch gekennzeichnet, dass** die Beleuchtungsvorrichtung (800, 801, 802) einen Lichtleiter (800) aufweist.

8. Anzeigevorrichtung nach einem der Patentansprüche 6 oder 7, **dadurch gekennzeichnet, dass** sie eine Blende (300) aufweist.

9. Anzeigevorrichtung nach Patentanspruch 7 und 8, **dadurch gekennzeichnet, dass** die Blende (300) als Kunststoffrahmen (300) ausgebildet und zwischen dem elektrooptischen Display (101) und dem Lichtleiter (800) angeordnet ist.

10. Verfahren zur Herstellung einer Anzeigevorrichtung nach einem oder mehreren der vorstehenden Patentansprüche, **dadurch gekennzeichnet, dass** das Kunststoffelement (200) zu dem Metallgehäuse (400) so ausgerichtet wird, dass sich ein Zwischenraum zwischen dem Metallgehäuse (400) und dem Kunststoffelement (200) ergibt und der sich ergebender Zwischenraum zwischen dem Kunststoffelement (200) und dem Metallgehäuse (400) mit einem Klebstoff (701, 703, 704) zumindest teilweise so ausgefüllt ist oder wird, dass das Gehäuse (400) mit dem Kunststoffelement (200) verklebt wird.

11. Verfahren nach Patentanspruch 10, **dadurch gekennzeichnet, dass** das Metallgehäuse (400) in eine erste Haltevorrichtung und das Kunststoffelement (200) in eine zweite Haltevorrichtung eingespannt und zueinander ausgerichtet werden.

12. Verfahren nach Patentanspruch 10 oder 11, **dadurch gekennzeichnet, dass** das elektrooptische Display (101) mit dem Kunststoffrahmen (300) verklebt wird, bevor das Kunststoffelement (200) mit dem Metallgehäuse (400) verklebt wird.

## Claims

1. Display device comprising an electro-optical display (101) and a metal housing (400) for installation in a motor vehicle, the display device being configured for connection to the motor vehicle, the display device furthermore comprising a plastic element (200) connected to the metal housing (400), and the plastic element (200) being configured for connection to the motor vehicle, **characterized in that** the plastic element (200) is adhesively bonded to the metal housing (400) by means of adhesive (701, 703, 704).

2. Display device according to Patent Claim 1, **characterized in that** the plastic element (200) comprises a link (201) for connecting the display device to the motor vehicle.

3. Display device according to Patent Claim 1 or 2, **characterized in that** the electro-optical display (101) is adhesively bonded by means of adhesive (702) to the metal housing (400) by way of a plastic frame (300).

4. Display device according to Patent Claim 1 or 2, **characterized in that** the electro-optical display (101) is clipped or screwed to a plastic frame, and the plastic frame is adhesively bonded to the housing (400) by means of adhesive (702).

5. Display device according to any of the preceding patent claims, **characterized in that** the plastic element (200) is configured in frame-shaped fashion.

6. Display device according to any of the preceding patent claims, **characterized in that** it comprises an illumination device (800, 801, 802) arranged between the electro-optical display (101) and the metal housing (400).

7. Display device according to Patent Claim 6, **characterized in that** the illumination device (800, 801, 802) comprises a light guide (800).

8. Display device according to either of Patent Claims 6 and 7, **characterized in that** it comprises a masking screen (300).

9. Display device according to Patent Claims 7 and 8, **characterized in that** the masking screen (300) is embodied as a plastic frame (300) and is arranged between the electro-optical display (101) and the light guide (800).

10. Method for producing a display device according to one or more of the preceding patent claims, **characterized in that** the plastic element (200) is aligned with the metal housing (400) in such a way as to result in an interspace between the metal housing (400) and the plastic element (200), and the resulting interspace between the plastic element (200) and the metal housing (400) has been or is filled at least partly with an adhesive (701, 703, 704) in such a way that the housing (400) is adhesively bonded to the plastic element (200).

11. Method according to Patent Claim 10, **characterized in that** the metal housing (400) is clamped into a first holding device and the plastic element (200) is clamped into a second holding device and they are aligned with one another.

12. Method according to Patent Claim 10 or 11, **characterized in that** the electro-optical display (101) is adhesively bonded to the plastic frame (300) before the plastic element (200) is adhesively bonded to the metal housing (400).

## Revendications

1. Dispositif d'affichage comportant un afficheur électro-optique (101) et un boîtier métallique (400) destiné à l'installation dans un véhicule automobile, le dispositif d'affichage étant conçu pour être relié au véhicule automobile, le dispositif d'affichage comprenant en outre un élément (200) en matière synthétique qui est relié au boîtier métallique (400), et l'élément (200) en matière synthétique étant conçu pour être relié au véhicule automobile, **caractérisé en ce que** l'élément (200) en matière synthétique est collé au boîtier métallique (400) au moyen d'un adhésif (701, 703, 704).

2. Dispositif d'affichage selon la revendication 1, **caractérisé en ce que** l'élément (200) en matière synthétique comporte une liaison (201) destinée à relier le dispositif d'affichage au véhicule automobile.

3. Dispositif d'affichage selon la revendication 1 ou 2, **caractérisé en ce que** l'afficheur électro-optique (101) est collé au boîtier métallique (400) au moyen d'un adhésif (702) par le biais d'un cadre (300) en matière synthétique.

4. Dispositif d'affichage selon la revendication 1 ou 2, **caractérisé en ce que** l'afficheur électro-optique (101) est clipsé ou vissé sur un cadre en matière synthétique et le cadre en matière synthétique est collé au boîtier (400) au moyen d'un adhésif (702).

5. Dispositif d'affichage selon l'une des revendications précédentes, **caractérisé en ce que** l'élément (200) en matière synthétique est conçu sous la forme d'un cadre.

6. Dispositif d'affichage selon l'une des revendications précédentes, **caractérisé en ce qu'**il comporte un dispositif d'éclairage (800, 801, 802) qui est disposé entre l'afficheur électro-optique (101) et le boîtier métallique (400).

7. Dispositif d'affichage selon la revendication 6, **caractérisé en ce que** le dispositif d'éclairage (800, 801, 802) comporte un guide de lumière (800).

8. Dispositif d'affichage selon l'une des revendications 6 et 7, **caractérisé en ce qu'**il comporte un écran (300).

9. Dispositif d'affichage selon les revendications 7 et 8, **caractérisé en ce que** l'écran (300) est réalisé sous la forme d'un cadre (300) en matière synthétique et est disposé entre l'afficheur électro-optique (101) et le guide de lumière (800).

10. Procédé de fabrication d'un dispositif d'affichage selon une ou plusieurs des revendications précédentes, **caractérisé en ce que** l'élément (200) en matière synthétique est orienté par rapport au boîtier métallique (400) de façon à ménager un espace intermédiaire entre le boîtier métallique (400) et l'élément (200) en matière synthétique et à remplir au moins partiellement d'un adhésif (701, 703, 704) l'espace intermédiaire résultant entre l'élément (200) en matière synthétique et le boîtier métallique (400) de manière à ce que le boîtier (400) soit collé à l'élément (200) en matière synthétique.

11. Procédé selon la revendication 10, **caractérisé en ce que** le boîtier métallique (400) est encastré dans un premier dispositif de retenue et l'élément (200) en matière synthétique est encastré dans un deuxième dispositif de retenue de manière à être alignés l'un avec l'autre.

12. Procédé selon la revendication 10 ou 11, **caractérisé en ce que** l'afficheur électro-optique (101) est collé au cadre (300) en matière synthétique avant que l'élément (200) en matière synthétique ne soit collé au boîtier métallique (400).
